# EUROPÄISCHE PATENTSCHRIFT

(11) **EP 3 166 775 B1**
(45) Veröffentlichungstag und Bekanntmachung des Hinweises auf die Patenterteilung: **29.07.2020**
(21) Anmeldenummer: 15729423.2
(22) Anmeldetag: 11.06.2015
(51) Int. Cl.: B29C 70/48, B29C 70/54, B29C 33/42

(54) **PRESSWERKZEUG MIT OPTIMIERTEM HARZFLUSS**
PRESSING TOOL WITH OPTIMIZED RESIN FLOW
MOULE DE PRESSAGE OPTIMISANT L'ÉCOULEMENT DE LA RÉSINE

(30) Priorität: 08.07.2014 DE 102014213187
(43) Veröffentlichungstag der Anmeldung: 17.05.2017
(73) Patentinhaber: Bayerische Motoren Werke Aktiengesellschaft, 80809 München (DE)
(72) Erfinder: BURLEFINGER, Hubert, 84095 Furth (DE); EBERL, Andreas, 94419 Reisbach (DE); FUCHS, David, 84028 Landshut (DE); MEIER, Thomas, 84032 Landshut (DE); MENDEL, Johannes, 84028 Landshut (DE); PASSREITER, Thomas, 94333 Geiselhöring (DE); STAUDT, Bernhard, 80797 München (DE); UNTERHAUSER, Thomas, 84137 Vilsbiburg (DE); WIETHALER, Tobias, 84032 Altdorf (DE); ZACHERLE, Bernd, 84028 Landshut (DE)
(86) Internationale Anmeldenummer: PCT/EP2015/063002
(87) Internationale Veröffentlichungsnummer: WO 2016/005138

(56) Entgegenhaltungen:
- DE-A1- 19 850 462
- US-A- 5 087 193
- US-A1- 2013 221 570

## Beschreibung

Die Erfindung betrifft ein Presswerkzeug zum Herstellen von Faserverbundbauteilen gemäß dem Oberbegriff des Patentanspruchs 1.

Bei der Herstellung von Faserverbundbauteilen kommt häufig das sogenannte "Resin-Transfer-Moulding"-Verfahren (kurz: RTM-Verfahren) zum Einsatz. Hierbei wird ein "trockenes", noch nicht imprägniertes Faserhalbzeug in ein Presswerkzeug eingelegt, das üblicherweise ein Unterwerkzeug und ein relativ hierzu verfahrbares Oberwerkzeug umfasst. Beide Werkzeuge bilden im geschlossenen Zustand wenigstens eine formgebende Werkzeugkavität zwischen einander aus. Nach dem Einlegen des Faserhalbzeugs in die Kavität wird das Werkzeug geschlossen und die Werkzeugkavität mit einer Kunststoffmasse bzw. Harzmasse (nachfolgend als Matrix bezeichnet) gefüllt, welche sich mit dem eingelegten Faserhalbzeug verbindet und unter Einwirkung von Druck und Wärme aushärtet. Nach dem Aushärten wird das Presswerkzeug geöffnet, um das auf diese Weise hergestellte faserverstärkte Faserverbundbauteil zu entnehmen. Ein entsprechendes RTM Werkzeug ist beispielsweise aus der DE 199 22 799 A1 bekannt.

Weitere Presswerkzeuge sind aus DE 198 50 462 A1, US 5,087,193 A und US 2013/221570 A1 bekannt.

Insbesondere in Bereichen des Faserhalbzeugs, welche bei der Verarbeitung im Presswerkzeug einen hohen Umformungsgrad erfahren, ist ein Harzfluss aufgrund der starken Umformung des Fasermaterials erschwert. Es kann daher leicht zur Entstehung von gering- oder nicht-imprägnierten Stellen (sogenannten Trockenstellen) oder Poren im späteren Bauteil kommen, die zumindest lokal dessen Festigkeit schwächen. In Abhängigkeit der Schwere dieser Schwachstellen eignet sich das Bauteil unter Umständen nicht mehr für den vorgesehenen Einsatzweck.

Verhindert werden diese Schwachstellen meist durch ein Bestreben hohe Umformgrade, beispielsweise aufgrund von Werkzeugkanten mit kleinen, scharfen Kantenradien, zu vermeiden. Jedoch wird hierdurch die gestalterische Freiheit für die Bauteilgeometrie derart eingeschränkt, dass eine Umsetzung nicht in allen Fällen möglich ist. Alternativ wird daher versucht, durch verlängerte Injektionszeiten einen verbesserten Harzfluss in allen Bereichen des Bauteils zur Vermeidung der genannten Fehlstellen zu erreichen. Hierdurch erhöht sich jedoch die Taktzeit für jedes Bauteil deutlich.

Aufgabe der Erfindung ist es daher ein Presswerkzeug bereitzustellen, das auf einfache und zuverlässige Art und Weise ermöglicht, Trockenstellen bei der Herstellung von Faserverbundbauteilen zu vermeiden und gleichzeitig eine möglichst kurze Takt- und Injektionszeit zu erzielen.

Diese Aufgabe wird gelöst mit einem Presswerkzeug mit den Merkmalen des Patentanspruchs 1. Vorteilhafte Weiterbildungen ergeben sich aus den abhängigen Ansprüchen.

Demnach wird ein Presswerkzeug zum Herstellen von Faserverbundbauteilen vorgesehen, mit einem ersten und einem relativ hierzu bewegbaren zweiten Werkzeugteil, wobei die beiden Werkzeugteile im geschlossenen Zustand des Presswerkzeugs eine formgebende Kavität zur Aufnahme eines zu formenden Faserhalbzeugs ausbilden und jeweils eine die Kavität begrenzende Werkzeugoberfläche aufweisen. Mindestens eine der Werkzeugoberflächen umfasst mindestens zwei benachbarte und zueinander geneigte bzw. angewinkelte Flächenabschnitte, die mittels eines gekrümmten Übergangsabschnitts miteinander verbunden sind. Des Weiteren weist der gekrümmte Übergangsabschnitt mindestens eine der formgebenden Kavität zugewandte, rinnenförmige Ausnehmung auf.

Das beschriebene Presswerkzeug umfasst also zumindest die beiden Werkzeugteile (zum Beispiel ein Ober- und Unterwerkzeug), die als Matrize und Patrize jeweils eine dreidimensional geformte Werkzeugoberfläche aufweisen und beim Schließen des Presswerkzeugs ineinander greifen, um dem eingelegten Faserhalbzeug eine entsprechende dreidimensionale Form zu geben.

Mit anderen Worten begrenzt also die dreidimensional geformte Werkzeugoberfläche die Kavität und wirkt somit formgebend für das zu formende Faserhalbzeug. Die Werkzeugoberfläche setzt sich hierzu üblicherweise aus mehreren unterschiedlich zueinander geneigten bzw. angewinkelt zueinander ausgerichteten Flächenabschnitten zusammen. Jeder dieser Flächenabschnitte kann eben (im Wesentlichen zweidimensional) oder dreidimensional geformt, insbesondere gekrümmt, ausgeführt sein.

Zwischen benachbarten und unterschiedlich geneigten Flächenabschnitten kann ein gekrümmter Übergangsabschnitt vorgesehen sein, über den die Flächenabschnitte miteinander verbunden sind. Der Übergangsabschnitt ist selbst ebenfalls Teil der Werkzeugoberfläche und stellt einen "fließenden", stetigen Übergang beider Flächenabschnitte zueinander dar. In der Regel ist der Übergangsabschnitt stärker gekrümmt als die Flächenabschnitte, so dass im Bereich des Übergangsabschnitts das Faserhalbzeug zumindest lokal höheren Umformgraden ausgesetzt ist als durch die Flächenabschnitte selbst.

Beispielsweise können je nach Abwinklung der Flächenabschnitte zueinander beim Schließen des Presswerkzeugs im Bereich dieser Übergangsabschnitte große Umformgrade, insbesondere Umformgrade zwischen 30° und 90°, auftreten, die einen Harzfluss negativ beeinflussen können.

Die eine oder mehreren Ausnehmung/en des Übergangsabschnitts sind dazu vorgesehen, einen Matrixfluss im Bereich des gekrümmten Übergangsabschnitts trotz der Umformung des Faserhalbzeugs und somit dessen zuverlässige Imprägnierung zu ermöglichen. Dies erfolgt dadurch, dass die Matrix durch die Ausnehmungen außerhalb des Faserhalbzeugs in die Bereiche der stärkeren Umformungen geleitet wird und dort aus der Ausnehmung heraus die Oberfläche des Faserhalbzeugs von außen nach innen durchdringen kann. Die Bildung von Trockenstellen oder Poren wird somit wirkungsvoll und einfach verhindert. Eine Verlängerung der Injektionszeit ist ebenfalls nicht erforderlich.

Vorzugsweise sind die eine oder die mehreren Ausnehmungen als sogenannte "Stichelungen" ausgestaltet und können leicht in die Werkzeugoberfläche eingebracht werden.

Der gekrümmte Übergangsabschnitt kann beispielsweise eine konvexe oder konkave Krümmung aufweisen. In beiden Fällen gelangt die Matrix über die Ausnehmungen in die Bereiche der gekrümmten Übergangsabschnitte, um die entsprechend umgeformten Stellen des Faserhalbzeugs sicher und zuverlässig zu imprägnieren.

Erfindungsgemäß erstreckt sich die mindestens eine Ausnehmung von einem an den ersten Flächenabschnitt angrenzenden Ende des gekrümmten Übergangabschnitts bis zu einem an den zweiten Flächenabschnitt angrenzenden Ende des gekrümmten Übergangsabschnitts. Dies hat den Vorteil, dass beide Enden der Ausnehmung in Bereichen der Werkzeugoberfläche angeordnet sind, die keine oder lediglich eine geringe Krümmung aufweisen. Daher kann sich dort die Matrix nahezu ungehindert verteilen, so dass Trockenstellen in diesen Bereichen nicht auftreten. Zusätzlich kann über die in diesen Bereichen vorgesehenen Enden der Ausnehmung die Matrix in die Ausnehmung eintreten und entlang der Erstreckungsrichtung der Ausnehmung fließen. Über die Ausnehmung gelangt die Matrix zuverlässig in den (stärker) gekrümmten Bereich des Übergangsabschnitts und stellt dort ebenfalls die Imprägnierung des Faserhalbzeugs sicher.

Entsprechend einer weiteren Ausführungsform kann sich die mindestens eine Ausnehmung von einem an den ersten Flächenabschnitt angrenzenden Ende des gekrümmten Übergangabschnitts bis in den zweiten Flächenabschnitt hinein erstrecken. Hierbei ist das in dem zweiten Flächenabschnitt angeordnete Ende der Ausnehmung vorzugsweise näher an einem Anguss zur Zuführung der Matrix als das entgegengesetzte Ende der Ausnehmung, das dem ersten Flächenabschnitt zugeordnet ist. Beispielsweise kann die Ausnehmung 2 bis 50mm, bevorzugt ca. 10mm in den zweiten Flächenabschnitt hineinragen. Selbstverständlich kann die Ausnehmung bei Bedarf ebenso in den ersten Flächenabschnitt in gleicher Weise und Weite hineinragen.

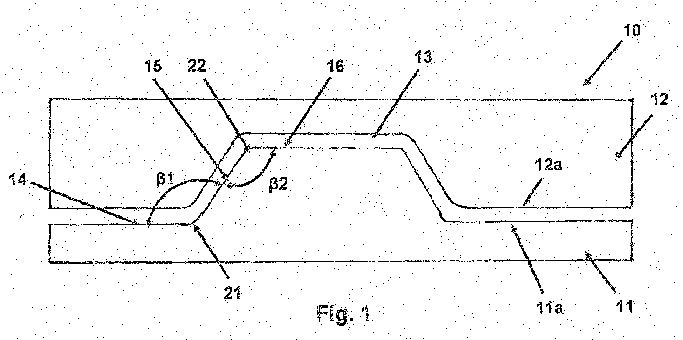

Beispielsweise kann der gekrümmte Übergangsabschnitt als abgerundete Kante ausgestaltet sein. Dies bedeutet, dass der Übergangsabschnitt einen Abschnitt definiert in dem die beiden Flächenabschnitte als gemeinsame Kante zusammenstoßen, wobei die Kante mit einem Kantenradius abgerundet ist. Der Übergangsabschnitt wird in diesem Fall durch den abgerundeten Verbindungsabschnitt definiert. Vorzugsweise beträgt der Kantenradius zwischen 2 und 10mm. Die beiden Flächenabschnitte schließen beispielsweise einen Winkel β von 90° ≤ β ≤ 135° ein (vgl. Fig. 1: β1 und β2).

Die mindestens eine Ausnehmung kann außerdem als rinnenförmige Einkerbung oder Einschnitt ausgestaltet sein. Grundsätzlich kann der Querschnitt der Ausnehmung zum Beispiel V- oder U- Förmig geformt sein. Jedoch sind ebenso andere Querschnitte einsetzbar, sofern eine ausreichende Abgabe von Matrix aus der Ausnehmung an das Faserhalbzeug im Bereich des Übergangsabschnitts erzielbar ist.

Des Weiteren kann eine Erstreckungsrichtung der mindestens einen Ausnehmung in einem Winkel α zwischen 0° < α ≤ ±90°, bevorzugt zwischen ±30° < α ≤ ±60°, insbesondere von im Wesentlichen α = ±45°, zu einer Erstreckungsrichtung des gekrümmten Übergangsabschnitts ausgerichtet sein.

Entsprechend einer weiteren Ausführungsform weist der gekrümmte Übergangsabschnitt mindestens zwei Ausnehmungen auf, wobei die Ausnehmungen in ihrer Erstreckungsrichtung parallel zueinander ausgerichtet sind. Vorzugsweise kann eine Mehrzahl von Ausnehmungen vorgesehen sein, die jeweils einen Abstand von 2 bis 20mm, besonders bevorzugt 5 bis 10mm, zu der benachbarten Ausnehmung aufweisen.

Zusätzlich oder alternativ kann der gekrümmte Übergangsabschnitt mindestens zwei Ausnehmungen aufweisen, wobei die beiden Ausnehmungen in einem Winkel γ zwischen 0° < γ ≤ ±90°, bevorzugt zwischen ±30° ≤ γ ≤ ±90°, insbesondere von im Wesentlichen γ = ±90°, zueinander ausgerichtet sind. Die entsprechend ausgerichteten Ausnehmungen können beabstandet zueinander oder kreuzend angeordnet sein.

Vorzugsweise weist die mindestens eine Ausnehmung eine Tiefe von mindestens 0,5 mm, vorzugsweise mindestens 2mm, besonders bevorzugt eine Tiefe zwischen 2 und 3mm, auf. Die Geometrie der Ausnehmungen ist vorzugsweise derart gewählt, dass eine negative Beeinflussung des Faserhalbzeugs, beispielsweise durch Eintreten des Faserhalbzeugs in die Ausnehmung (im Wesentlichen) verhindert wird. Vorteilhaft ist hierbei eine Breite der Ausnehmung bzw. deren Öffnung gegenüber der Kavität von 1 bis 10mm, vorzugsweise 2 bis 5mm.

Grundsätzlich kann das Presswerkzeug als RTM-Werkzeug oder als Nasspress-Werkzeug ausgebildet sein.

Zwar wurden die obigen Ausführungen stets im Zusammenhang mit einem möglichst optimalen Matrixfluss an das Faserhalbzeug im Rahmen einer Harzinjektion dargelegt, jedoch gelten die Ausführungen analog für ein Nasspressen eines bereits vorimprägnierten Faserhalbzeugs. Auch bei diesem kann es durch hohe Umformgrade insbesondere im Bereich stark gekrümmter Übergangsabschnitte zu einer lokalen Verdrängung von Matrix im Faserhalbzeug und somit zu einer Störung der vollständigen Imprägnierung kommen. In diesem Fall ermöglichen die Ausnehmungen ebenfalls einen ausgleichenden Harzfluss in den Übergangsabschnitt vorzusehen und verhindern somit ebenfalls die Entstehung von Trockenstellen oder Poren.

Es versteht sich, dass das beschriebene Werkzeugteil eine oder mehrere der beschriebenen Übergangsabschnitte aufweisen kann. Auch können diese eine gleiche oder eine unterschiedliche Anzahl, Anordnung und Ausrichtung der Ausnehmungen aufweisen.

Die Erfindung wird nachfolgend unter Bezugnahme auf die Zeichnungen anhand eines Ausführungsbeispiels näher erläutert. Es zeigen:
Fig. 1 ein Presswerkzeug zum Herstellen eines Faserverbundbauteils,
Fig. 2 ein Werkzeugteil des Presswerkzeugs aus Fig. 1 in perspektivischer Ansicht gemäß der Beschreibung und
Fig. 3 eine Detailansicht eines Übergangsabschnitts mit mehreren Varianten von Ausnehmungen für ein Werkzeugsteil gemäß der Beschreibung.

Fig. 1 zeigt ein Presswerkzeug 10 zum Herstellen von Faserverbundbauteilen aus Faserhalbzeugen, mit einem ersten 11 und einem relativ hierzu bewegbaren zweiten Werkzeugteil 12. Die beiden Werkzeugteile 11,12 bilden im geschlossenen Zustand des Presswerkzeugs gemäß Fig. 1 eine formgebende Kavität 13 zur Aufnahme des zu formenden Faserhalbzeugs (nicht dargestellt) aus und weisen jeweils eine die Kavität begrenzende Werkzeugoberfläche 11a, 12a auf.

Beide Werkzeugoberflächen 11a,12a umfassen mehrere zueinander benachbarte und zueinander geneigte (ebene) Flächenabschnitte, die jeweils mittels gekrümmter Übergangsabschnitte miteinander verbunden sind.

Der Übersichtlichkeit halber wird lediglich der Aufbau eines Teils der Werkzeugoberfläche 11a der unteren Werkzeughälfte 11 näher beschrieben. Gleiches gilt bei Bedarf auch für die restlichen entsprechenden Abschnitte der Werkzeugoberfläche 11 sowie für die gesamte zweite Werkzeugoberfläche 12a.

Die Werkzeugoberfläche 11a umfasst in der dargestellten Ausführungsform die zwei benachbarten und um den Winkel β1 zueinander abgewinkelte Flächenabschnitte 14,15 bzw. die zwei benachbarten und um den Winkel β2 zueinander abgewinkelte Flächenabschnitte 15, 16. Diese sind jeweils mittels eines gekrümmten Übergangsabschnitts 21 bzw. 22 miteinander verbunden. Der jeweilige Übergangsabschnitt 21 bzw. 22 definiert also den gekrümmten Bereich der Kante an der die beiden Flächen 14 und 15 bzw. 15 und 16 zusammenstoßen.

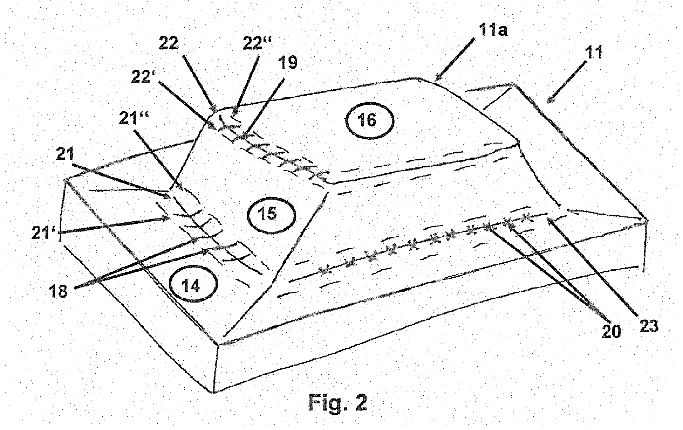

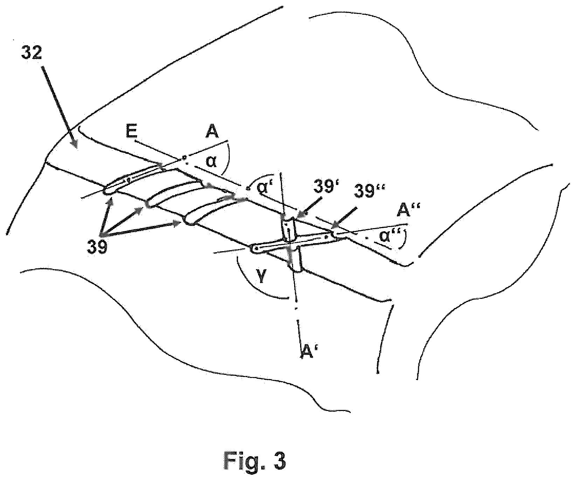

Beim Schließen des Presswerkzeugs 10 und Pressen des eingelegten Faserhalbzeugs erfährt dieses im Bereich der Übergangsabschnitte 21 und 22 eine im Vergleich zu den Flächenabschnitten 14, 15 und 16 hohe Umformung, die üblicherweise zu einem verminderten lokalen Matrixfluss und damit zu Trockenstellen im erzeugten Faserverbundbauteil führen würde. Durch die in Fig. 2 und 3 dargestellten Ausnehmungen 18, 19 20 kann diese Erscheinung jedoch wirkungsvoll verhindert werden.

Fig. 2 zeigt in lediglich schematischer Darstellung das Werkzeugteil 11 des Presswerkzeugs 10 aus Fig. 1 in perspektivischer Ansicht. Der erste Übergangsabschnitt 21 weist, bezogen auf die Kavität 13 eine konkave Krümmung auf. Dagegen ist der zweite Übergangsabschnitt 22 konvex gekrümmt. Der gekrümmte Übergangsabschnitt 21 bzw. 22 stellt - mit anderen Worten beschrieben - jeweils eine abgerundete Kante zwischen den jeweils zu beiden Seiten benachbarten Flächenabschnitten 14 und 15 bzw. 15 und 16 dar. Jeder der gekrümmten Übergangsabschnitte 21 und 22 umfasst außerdem eine Anzahl von der Kavität zugewandten Ausnehmungen 18, 19, wobei jede dieser Ausnehmungen 18,19 als Einkerbung oder Einschnitt in der Werkzeugoberfläche 11a ausgestaltet ist.

Jede der Ausnehmungen 18 des Übergangsabschnitts 21 erstreckt sich in ihrer Erstreckungsrichtung (vgl. Fig. 3) von einem an den jeweils ersten Flächenabschnitt 14 angrenzenden ersten Ende 21' des gekrümmten Übergangsabschnitts 21 bis zu einem an den zweiten Flächenabschnitt 15 angrenzenden zweiten Ende 21" des gekrümmten Übergangsabschnitts 21. Beide Enden 21' und 21" des Übergansabschnitts 21 sind als stetiger Übergang des jeweiligen Flächenabschnitts 14 bzw. 15 in die Krümmung des Übergangsabschnitts 21 zu verstehen.

Gleiches gilt für die Ausnehmungen 19 des Übergangsabschnitts 22, die sich von einem ersten Ende 22' des Übergangsabschnitts 22 bis zu einem zweiten Ende 22" des Übergangsabschnitts 22 erstrecken.

Lediglich beispielhaft zu Anschauungszwecken ist ein dritter Übergangsabschnitt 23 mit einer gekreuzten Anordnung von Ausnehmungen 20 dargestellt.

Die Anordnung aller dargestellten Ausnehmungen ist lediglich beispielhaft und zur Anschauung mehrerer verschiedener Ausführungen zu verstehen. Selbstverständlich kann an jedem oder nur an einzelnen der Übergangsabschnitte des Werkzeugteils 11 eine oder mehrere Ausnehmungen vorgesehen werden.

Jeder Übergangsabschnitt kann also individuell oder bedarfsgerecht mit oder ohne Ausnehmungen ausgeführt werden. Ebenso kann eine Anzahl, Anordnung, Ausrichtung und Geometrie jeder einzelnen Ausnehmung unabhängig von anderen Ausnehmungen gewählt sein.

Fig. 3 zeigt dementsprechend lediglich als Muster eine Auswahl verschiedener Ausrichtungsvarianten der Ausnehmungen 39 bzw. 39' und 39" auf einem konvex gekrümmten Übergangsabschnitts 32 mit einer Erstreckungsrichtung E. Die jeweilige Erstreckungsrichtung A der ersten drei Ausnehmungen 39 sind in einem Winkel α von beispielsweise ca. α = 45° zu der Erstreckungsrichtung E des gekrümmten Übergangsabschnitts 32 ausgerichtet. Zusätzlich sind die drei Ausnehmungen 39 in ihrer Erstreckungsrichtung A parallel zueinander ausgerichtet. Der Übersichtlichkeit halber ist lediglich die Erstreckungsrichtung A der ersten Ausnehmung 39 (links) gekennzeichnet.

Anstelle einer parallelen Anordnung der Ausnehmungen zueinander besteht beispielsweise auch die Möglichkeit einer gekreuzten Ausrichtung, wie anhand der beiden Ausnehmungen 39' und 39" verdeutlicht werden soll. Hierbei können die Erstreckungsrichtungen A' und A" der beiden rinnenförmigen Ausnehmungen 39' und 39" in einem Winkel γ zwischen 0°und ±90°, bevorzugt zwischen ±30° und ±90°, insbesondere in einem Winkel von im Wesentlichen γ ≈ 90°, zueinander ausgerichtet sein. Entsprechend sind die Winkel α' und α" gegenüber der Erstreckungsrichtung E des Übergangsabschnitts 32 zu wählen.

Nicht dargestellt ist eine Tiefe der Ausnehmungen 39, 39' und 39". Diese kann beispielsweise mindestens 0,5mm, vorzugsweise mindestens 2 mm, besonders bevorzugt zwischen 2 und 3mm, betragen.

Da Fig. 3 lediglich beispielhafte Muster der Ausnehmungen und deren Anordnung zeigt, ist es selbstverständlich, dass an einem Übergangsabschnitt - wie bereits beschrieben - entweder keine oder eine beliebige Anzahl von Ausnehmungen angeordnet sein kann. Auch die jeweilige Anordnung und Ausrichtung jeder einzelnen Ausnehmung kann individuell ausgeführt und insbesondere auf lokale Erfordernisse des Presswerkzeugs abgestimmt sein.

Es ist daher möglich, pro Übergangsabschnitt alle Ausnehmungen ausschließlich parallel zueinander oder die Ausnehmungen ausschließlich gekreuzt zueinander, insbesondere paarweise gekreuzt, anzuordnen. Selbstverständlich sind aber auch gemischte Anordnungen möglich.

Der beschriebene Aufbau eignet sich nicht nur für einen konvexen Übergangsabschnitt sondern kann in analoger Weise ebenso für einen Übergangsabschnitt mit konkaver Krümmung vorgesehen sein.

## Patentansprüche

1. Presswerkzeug zum Herstellen von Faserverbundbauteilen, mit einem ersten (11) und einem relativ hierzu bewegbaren zweiten Werkzeugteil (12), wobei die beiden Werkzeugteile (11,12) im geschlossenen Zustand des Presswerkzeugs (10) eine formgebende Kavität (13) zur Aufnahme eines zu formenden Faserhalbzeugs ausbilden und jeweils eine die Kavität begrenzende Werkzeugoberfläche (11a,12a) aufweisen, wobei mindestens eine der Werkzeugoberflächen (11a) mindestens zwei benachbarte und zueinander geneigte Flächenabschnitte (14,15,16) umfasst, die mittels eines gekrümmten Übergangsabschnitts (21,22) miteinander verbunden sind, wobei der gekrümmte Übergangsabschnitt (21,22) mindestens eine der Kavität (13) zugewandte, rinnenförmige Ausnehmung (18,19) aufweist **dadurch gekennzeichnet, dass**
sich die mindestens eine rinnenförmige Ausnehmung (18,19) von einem an den ersten Flächenabschnitt (14,15) angrenzenden Ende (21',22') des gekrümmten Übergangsabschnitts bis zu einem an den zweiten Flächenabschnitt (15,16) angrenzenden Ende (21",22") des gekrümmten Übergangsabschnitts (21,22) erstreckt.

2. Presswerkzeug nach Anspruch 1, **dadurch gekennzeichnet, dass** der gekrümmte Übergangsabschnitt (21,22) eine konvexe oder konkave Krümmung aufweist.

3. Presswerkzeug nach einem der vorhergehenden Ansprüche, **dadurch gekennzeichnet, dass** der gekrümmte Übergangsabschnitt (21,22) als abgerundete Kante ausgestaltet ist.

4. Presswerkzeug nach einem der vorhergehenden Ansprüche, **dadurch gekennzeichnet, dass** die mindestens eine rinnenförmige Ausnehmung (18,19) als Einkerbung oder Einschnitt ausgestaltet ist.

5. Presswerkzeug nach einem der vorhergehenden Ansprüche, **dadurch gekennzeichnet, dass** eine Erstreckungsrichtung (A,A',A") der mindestens einen rinnenförmige Ausnehmung (18,19) in einem Winkel α zwischen 0° < α ≤ ±90°, in einem Winkel α zwischen ±30° < α ≤ ±60°, oder in einem Winkel von im Wesentlichen α = ±45° zu einer Erstreckungsrichtung (E) des gekrümmten Übergangsabschnitts (21,22) ausgerichtet ist.

6. Presswerkzeug nach einem der vorhergehenden Ansprüche, **dadurch gekennzeichnet, dass** der gekrümmte Übergangsabschnitt (21,22) mindestens zwei rinnenförmige Ausnehmungen (18,19,39) aufweist, wobei die rinnenförmigen Ausnehmungen (18,19,39) in ihrer Erstreckungsrichtung (A) parallel zueinander ausgerichtet sind.

7. Presswerkzeug nach einem der vorhergehenden Ansprüche, **dadurch gekennzeichnet, dass** der gekrümmte Übergangsabschnitt (21,22) mindestens zwei rinnenförmige Ausnehmungen (39',39") aufweist, wobei die Erstreckungsrichtungen (A',A") der beiden rinnenförmigen Ausnehmungen (39',39") in einem Winkel γ zwischen 0° < γ ≤ ±90°, oder in einem Winkel γ zwischen ±30° < γ ≤ ±90°, oder in einem Winkel von im Wesentlichen γ = ±90° zueinander ausgerichtet sind.

8. Presswerkzeug nach einem der vorhergehenden Ansprüche, **dadurch gekennzeichnet, dass** die mindestens eine rinnenförmige Ausnehmung (18,19,39,39',39") eine Tiefe von mindestens 0,5mm, eine Tiefe von mindestens 2 mm oder eine Tiefe zwischen 2 und 3mm aufweist.

9. Presswerkzeug nach einem der vorhergehenden Ansprüche, **dadurch gekennzeichnet, dass** das Presswerkzeug (10) ein RTM-Werkzeug oder ein Nasspress-Werkzeug ist.

## Claims

1. Pressing tool for producing composite fibre components having a first tool portion (11) and a second tool portion (12) which is movable relative thereto, wherein the two tool portions (11, 12) form, in the closed state of the pressing tool (10), a forming cavity (13) for receiving a semi-finished fibre product which is intended to be formed and have a tool surface (11a, 12a) which delimits the cavity, wherein at least one of the tool surfaces (11a) comprises at least two adjacent and mutually inclined surface portions (14, 15, 16) which are connected to each other by means of a curved transition portion (21, 22), wherein the curved transition portion (21, 22) has at least one channel-like recess (18, 19) which faces the cavity (13),
**characterized in that**
the at least one channel-like recess (18, 19) extends from an end (21', 22') of the curved transition portion, which end adjoins the first surface portion (14, 15), as far as an end (21", 22") of the curved transition portion (21, 22), which end adjoins the second surface portion (15, 16) .

2. Pressing tool according to Claim 1, **characterized in that** the curved transition portion (21, 22) has a convex or concave curvature.

3. Pressing tool according to either of the preceding claims, **characterized in that** the curved transition portion (21, 22) is constructed as a rounded edge.

4. Pressing tool according to one of the preceding claims, **characterized in that** at least one channel-like recess (18, 19) is constructed as a notch or indentation.

5. Pressing tool according to one of the preceding claims, **characterized in that** an extent direction (A, A', A") of the at least one channel-like recess (18, 19) is oriented at an angle α of between 0° < α ≤ ± 90°, at an angle α between ± 30° < α ≤ ± 60°, or at an angle of substantially α = ± 45°, relative to an extent direction (E) of the curved transition portion (21, 22).

6. Pressing tool according to one of the preceding claims, **characterized in that** the curved transition portion (21, 22) has at least two channel-like recesses (18, 19, 39), wherein the channel-like recesses (18, 19, 39) are orientated parallel with each other in the extent direction (A) thereof.

7. Pressing tool according to one of the preceding claims, **characterized in that** the curved transition portion (21, 22) has at least two channel-like recesses (39', 39"), wherein the extent directions (A', A") of the two channel-like recesses (39', 39") are orientated relative to each other at an angle γ between 0° < γ ≤ ± 90°, or at an angle γ between ± 30° < γ ≤ ± 90°, or at an angle of substantially γ = ± 90°.

8. Pressing tool according to one of the preceding claims, **characterized in that** the at least one channel-like recess (18, 19, 39, 39', 39") has a depth of at least 0.5 mm, a depth of at least 2 mm or a depth between 2 and 3 mm.

9. Pressing tool according to one of the preceding claims, **characterized in that** the pressing tool (10) is an RTM tool or a wet pressing tool.

## Revendications

1. Moule de pressage pour fabriquer des éléments composites renforcés de fibres, comprenant une première partie de moule (11) et une deuxième partie de moule (12) mobile par rapport à celle-ci, dans lequel les deux parties de moule (11, 12), à l'état fermé du moule de pressage (10), constituent une cavité de formage (13) pour recevoir un produit semi-fini à base de fibres à former et présentent respectivement une surface de moule (11a, 12a) délimitant la cavité, dans lequel au moins l'une des surfaces de moule (11a) comprend au moins deux portions de surface (14, 15, 16) voisines et inclinées les unes par rapport aux autres, qui sont reliées les unes aux autres au moyen d'une portion de transition incurvée (21, 22), dans lequel la portion de transition incurvée (21, 22) présente au moins un évidement (18, 19) en forme de rainure, tourné vers la cavité (13),
**caractérisé en ce que** ledit au moins un évidement en forme de rainure (18, 19) s'étend depuis une extrémité (21', 22') adjacente à la première portion de surface (14, 15) de la portion de transition incurvée jusqu'à une extrémité (21", 22") adjacente à la deuxième portion de surface (15, 16) de la portion de transition incurvée (21, 22).

2. Moule de pressage selon la revendication 1, **caractérisé en ce que** la portion de transition incurvée (21, 22) présente une courbure convexe ou concave.

3. Moule de pressage selon l'une quelconque des revendications précédentes, **caractérisé en ce que** la portion de transition incurvée (21, 22) est configurée sous forme de rebord arrondi.

4. Moule de pressage selon l'une quelconque des revendications précédentes, **caractérisé en ce que** ledit au moins un évidement en forme de rainure (18, 19) est configuré sous forme d'encoche ou d'entaille.

5. Moule de pressage selon l'une quelconque des revendications précédentes, **caractérisé en ce qu'**une direction d'extension (A, A', A") dudit au moins un évidement en forme de rainure (18, 19) est orientée selon un angle α compris entre 0° < α ≤ ±90°, selon un angle α compris entre ±30° < α ≤ ±60°, ou selon un angle de substantiellement α = ±45° par rapport à une direction d'extension (E) de la portion de transition incurvée (21, 22).

6. Moule de pressage selon l'une quelconque des revendications précédentes, **caractérisé en ce que** la portion de transition incurvée (21, 22) présente au moins deux évidements en forme de rainure (18, 19, 39), les évidements en forme de rainure (18, 19, 39) étant orientés en parallèle les uns par rapport aux autres dans leur direction d'extension (A).

7. Moule de pressage selon l'une quelconque des revendications précédentes, **caractérisé en ce que** la portion de transition incurvée (21, 22) présente au moins deux évidements en forme de rainure (39', 39"), les directions d'extension (A', A") des deux évidements en forme de rainure (39', 39") étant orientées l'une par rapport à l'autre selon un angle γ compris entre 0° < γ ≤ ±90° ou selon un angle γ compris entre ±30° < γ ≤ ±90°, ou selon un angle de substantiellement γ = ±90°.

8. Moule de pressage selon l'une quelconque des revendications précédentes, **caractérisé en ce que** ledit au moins un évidement en forme de rainure (18, 19, 39, 39', 39") présente une profondeur d'au moins 0,5 mm, une profondeur d'au moins 2 mm ou une profondeur comprise entre 2 et 3 mm.

9. Moule de pressage selon l'une quelconque des revendications précédentes, **caractérisé en ce que** le moule de pressage (10) est un moule RTM ou un moule de pressage humide.
